# EUROPEAN PATENT SPECIFICATION

(11) **EP 2 172 598 B1**
(45) Date of publication and mention of the grant of the patent: **10.02.2016**
(21) Application number: 09012511.3
(22) Date of filing: 02.10.2009
(51) Int. Cl.: E04B 1/76, E04B 1/80, E04C 2/00, E04C 2/10, E04C 2/20, B32B 5/18, B29C 44/58, E04C 2/32

(54) **Insulating panel for buildings of various kind and process for obtaining an insulating panel provided with small through holes**
Isolierpanel und Verfahren zur Herstellung von Isolierpanelen mit kleinen durchgehende Löcher
Panneau d'isolation et procédé de fabrication de panneaux d'isolation avec des petits trous traversants

(30) Priority: 03.10.2008 IT PN20080071; 01.06.2009 IT PN20090036
(43) Date of publication of application: 07.04.2010
(73) Proprietor: Politop s.r.l., 31040 Meduna di Livenza (IT)
(72) Inventor: Panontin, Mario, 31040 Meduna di Livenza (IT); Cester, Renzo, 31045 Motta di Livenza (IT)
(74) Representative: Dalla Rosa, Adriano

(56) References cited:
- US-A- 2 406 589
- US-A- 5 766 721
- US-A- 6 103 163
- US-A1- 2003 146 582

## Description

The invention relates to an insulating panel for inhabited buildings of various kind, adapted to provide for an effective thermal insulation of the inhabited buildings towards the outer environment and to prevent the condensate to be formed into the same inhabited buildings, thereby increasing the inhabited comfort.

The invention also relates to a process for obtaining an insulating panel for inhabited buildings of various kind provided with small through holes.

From US5766721A it is known an insulation barrier made with a flexible foam polyethylene substrate and a film which is secured to at least one side of the substrate and which extends from at least one lateral edge of the substrate. The insulation barrier may be supplied in roll form or in panel form. In one embodiment, the film may be provided with a plurality of small holes to permit moisture vapor to pass through under a differential pressure on opposite sides of the barrier. In still another embodiment, the substrate may be provided with spaced apart embossments while the film is provided with pockets receiving the embossments. The barrier has multiple uses as an insulation/vapor barrier for interior and exterior use on buildings including use in roofing, flooring and walls. Said document discloses all the features of the preamble of claim 1.

From US2003/146582A1 it is known a sealing member having a low permeability in the direction perpendicular to the compressing direction, having excellent water sealing capability, and that can be elastically deformed at an increased rate. The sealing member is interposed between parts. The sealing member is composed of synthetic resin foam or rubber foam. The ratio of the permeability A in a compressing direction at non-compressed state to the permeability B in a direction perpendicular to the compressing direction at 50% compressed state in the compressing direction, that is A/B, is 1-40. The foam is punched to form needle holes from both sides in the compressing direction by needle punches, thereby manufacturing the sealing member. Said document discloses all the features of the preamble of claim 5.

From US2406589A it is known a mold comprising a bottom wall with surrounding upwardly extending side walls forming a mold cavity, and a plurality of cores extending upwardly from said bottom wall part way to the top of said cavity, a removable cover for closing said mold cavity and having a plurality of depending cores which extend part way to the bottom of said mold cavity, and means supporting the cover in cavity closing position in a predetermined separated relation from the said side walls for escapement of excess contents from the mold cavity.

From US6103163A it is known an open-cell plastic foam sheets with smooth, closed surfaces which are heated up to a predetermined temperature after extrusion, are thermoformed in a thermoforming unit with the aid of a vacuum on both sides and are thermoset.

One of the two closed surface skins of the plastic foam sheet is perforated with the aid of needles arranged movably in a mold block. The mold block is a component part of a thermoforming unit and, together with a further mold block, forms the mold of this thermoforming unit.

The mold block for the inner side of a plastic foam sheet includes a male mold, a cooling plate, a vacuum plate, the movable needles, a needle plate, springs for the return of the needle plate and also diaphragms and a mounting plate, which are held together by screws.

The object of the present invention is to realize an insulating panel for buildings of various kind and a process for obtaining an insulating panel for inhabited buildings of various kind provided with small through holes, which insulating panel is made in a different manner than the insulating barrier disclosed by the state of the art represented by US5766721A, and which process is effected in a different manner than the state of the art represented by US2003/146582A1, US2406589A and US6103163A.

The insulating panel and the process for obtaining an insulating panel provided with small through holes are made with the characteristics substantially described with particular reference to the enclosed claims.

The present invention will be better understood from the following description, given by way of not-limiting example only, and with reference to the accompanying drawings, wherein :
Fig. 1 shows a perspective front view of the insulating panel for inhabited buildings of various kind,
according to the invention ;
Fig. 2 shows an enlarged perspective view of a constructive item of Fig. 1 ;
Fig. 3 shows a back perspective view of the insulating panel for inhabited buildings of various kind,
according to the invention ;
Fig. 4 shows an enlarged perspective view of an enlarged item of Fig. 3 ;
Fig. 5 shows a schematic cutaway view of a first operative step for making the small through holes of an insulating panel according to the invention, in a first manufacturing mode thereof;
Fig. 6 shows a schematic cutaway view of a second operative step of the panel manufacturing mode;
Fig. 7 shows a schematic cutaway view of a third operative step of the panel manufacturing mode;
Fig. 8 shows a front cutaway view of the panel obtained with the operative steps of Figs. 5-7 ;

The above mentioned Figures illustrate an insulating panel 5 for inhabited buildings of various kind, of simple construction, and versatile for being employed in the inhabited buildings of the most varied kinds, in order to insulate thermally the housings in which it is mounted.

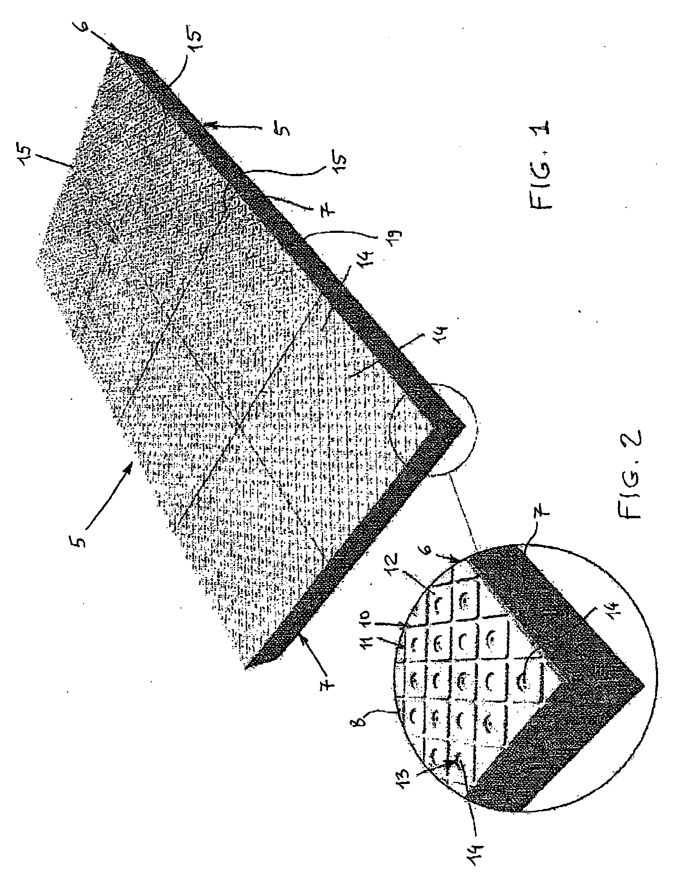

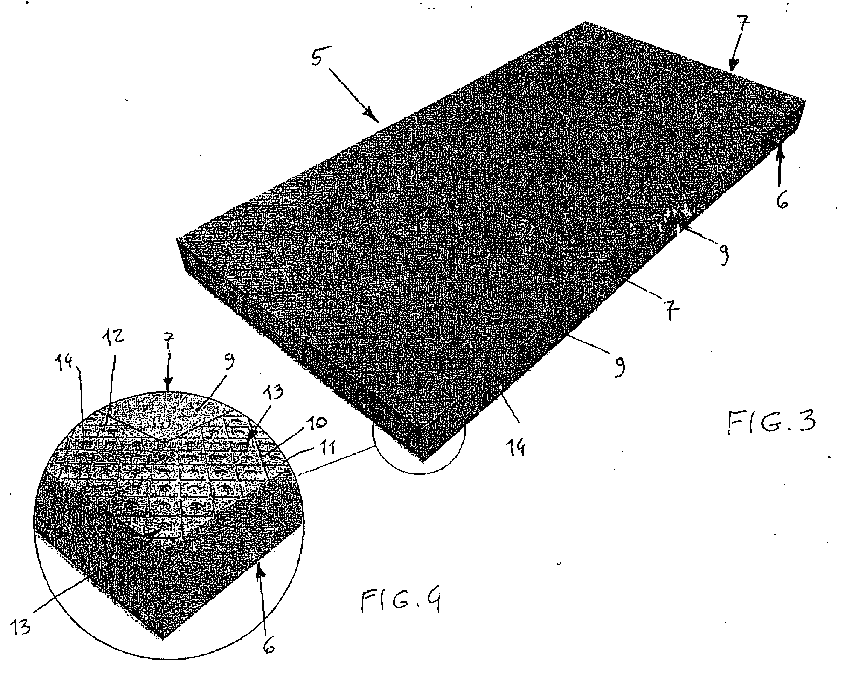

With reference to Figs. 1 and 3, in which a respective perspective front and back view of the present insulating panel are shown, it is noted that it is made of a single insulating material, of the kind formed by foamable plastic materials, preferably foam polystyrene, which has very good insulating characteristics, high strength to the atmospheric agents and can be manufactured on an industrial scale with processes of traditional kind. This insulating panel 5 is realized of parallelepiped shape and intended, in particular, to realize specifically but not exclusively a "covering enclosure" of the inhabited buildings, namely a thermal insulation which is applied on to the outer surfaces of the perimetrical walls of the same buildings, and afterwards is covered externally with finishing material and parging. Such insulating panel is composed of a single material obtained by molding process with double density, thereby creating a first overlying layer of insulating material 6, and a second underlying layer of insulating material 7, of which the first layer is made with a smaller thickness and a light colour, so as to reflect partially the incident solar radiation, and with a greater density of material, and therefore with a stiffness and a sturdiness which are greater than that of the second layer of material 7, for the reasons set forth below, and the second underlying layer of insulating material 7 is made with a greater thickness with respect to the first layer 6 and with smaller density of material, and therefore softer. Moreover, such second layer 7 during molding process of the panel 5 is mixed with a suitable powdered material having a dark colouring, preferably with the graphite, of black colour, in a way that such graphite be distributed uniformly for the entire extent of the same layer, and on the contrary cannot be mixed with the material of the first layer 6. The scope of such colouring of the second layer 7 is to reflect the incident solar radiation, thereby increasing the insulating capacity on this panel area.

Furthermore, in the so realized insulating panel there are also provided, always by molding process, on to the external upper flat surface 8 of the overlying layer 6 (see Fig. 1) and on to the external lower surface 9 of the underlying layer 7 (see Fig. 3), two respective sets of parallel rectilinear grooves 10 and 11, which are perpendicular to each other (see also Figs. 2 and 4), in such a way that some high-relieves 12 having rectangular or square or similar shape are created, in order to make easier the finishing material needed for applying the parging to be sticked onto both the external surfaces of the panel 5, which material is usually employed for the construction of the walls of the housings. Besides, at the centre of the high-relieves 12 of each panel outer surface there are provided some hollowed zones 13, always adapted to increase the sticking of such material on to the panel 5, and in the centre of which there are ending the end portions of corresponding small through holes 14, provided through all the thickness of the panel, which are adapted to let to pass the condensate which is formed in the walls of the housings from the inside toward the outside of the same housings. In order to make the panel 5 versatile and adaptable to the different sizes of the inhabited buildings, during the molding process of the same panel there are provided into it some de-tensioning lines 15, which are provided on to the surface of the thicker layer 6, in the direction perpendicular and/or parallel to the external sides of the panel 5, which ensure the indeformability of the panel positioned in place because of thermal and/or mechanical stresses.

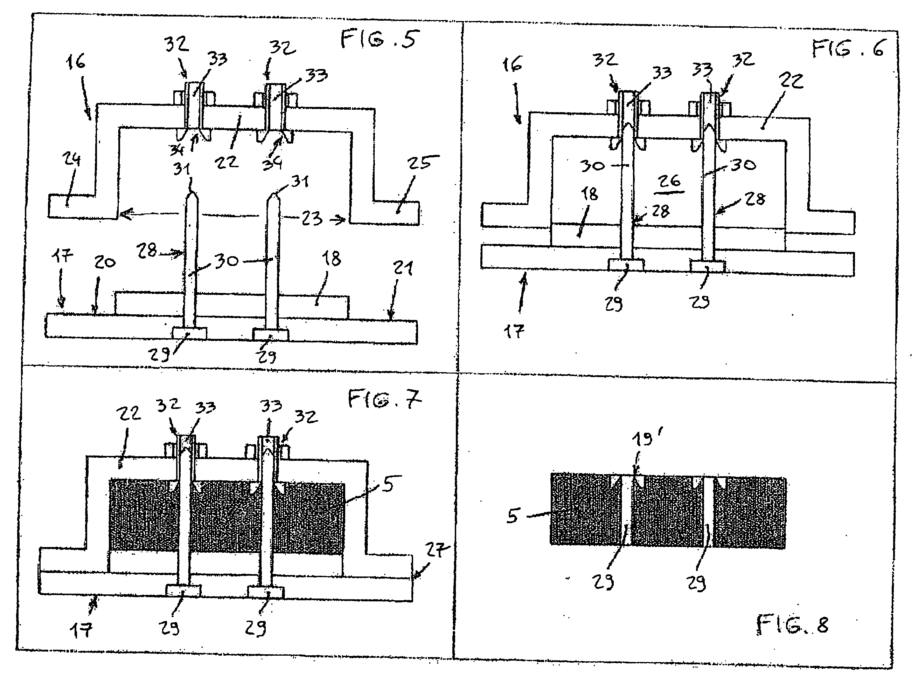

The so realized panel 5 is then applied like an envelope vertically on to the outer surfaces of the walls made of concrete and/or bricks and/or other used building materials, in a manner to insulate the inner environments of said buildings from the loss of heat outwards, and this application of the panels is effected in such a way that the first thicker layer 6 finds itself in the panel outer surface turned toward the external environment and the second less thick layer 7 is turned inwards, and this in order that the thicker material of the first layer 6 has a high resistance to compression and other mechanical actions which in case are exerted on to the envelope outer part and moreover, thanks to the light colouring, reflects on a large extent the incident solar radiation. In turn, thanks to the insulating properties of the material used for the second layer, increased by the materials mixed with the panel material, it is increased the insulating capacity of the panel 5, in a manner that such insulating property may not be changed noticeably by the presence of the small through holes, having an adequately designed surface distribution. Thanks to the fact to discharge the condensate from the interior outwards through the small through holes 14, also the life duration of the panel is increased and it is ensured that the insulating properties of the panel during its operation can be kept steady and homogeneous. The small through holes 14 of the insulating panel may be manufactured in different modes, respectively a first mode indicated in the Figs. 2-5, a second mode indicated in the Figs. 6-8, in which for all these modes a standard mold 16 made of per se known metallic material is used, with some suitable changes for each used mode, and in which there are performed the operation steps which will be described later on.

Such standard mold 16 is constituted, for all the manufacturing modes, by a first stationary upper element 16 (matrix) and a second movable lower element 17 (punch).

Such punch 17 is essentially a flat plate, having dimensions larger than those of the panel 5, at the centre of which a further flat support plate 18 placed in an overlapped position is fixed, which plate performs the function which will be described, and is shaped with parallelepiped form with the same dimensions of the base 19 of the insulating panel 5, thereby defining the two side flat portions 20 and 21. In turn, the matrix 16 is constituted by a box-like shaped central part 22, which is raised with respect to the open base zone 23 of the same matrix, and that in correspondence of this base zone it is extended with two side flat portions 24 and 25, which in the mold closed position are coupled perfectly with the relative side flat portions 20 and 21 of the punch 17, under the condition in which also the further flat plate 18 is coupled with the base zone 23, thereby defining an inner room 26 (see Fig. 6) in which the insulating panel is obtained. During all the standard operative steps of the different manufacturing modes, the molding of the insulating panel is effected as usual by displacing the punch 17 with respect to the matrix 16, up to the base zone 23 skims the upper surface of the same punch, by letting between these parts a reduced vent 27 to be formed, and under this condition air contained in the inner room 26 is vented outward thanks to the dimensional difference between the base zone 23 and the plate 18, in such a manner that into such inner room there are so injected the polystyrene small spheres for molding the insulating panel.

Afterwards, when such inner room 26 has been filled with the polystyrene small spheres, the punch 17 is lifted again up to become adherent with the matrix 16, so as to close the inner room in order to be able to sinter the polystyrene in such a way that to obtain an insulating panel 5.

Finally, after the sintering the panel 5 is adequately cooled, and the punch 17 is lowered again into the starting position thereof, in order to be able to extract the same insulating panel by the employed personnel, or by per se known extractor devices.

By referring now to the Figs. 5-8, in which it is represented a first mode of the manufacturing process of the insulating panel 5, it is noted that in the punch 17 there are fixed some thin metallic needles 28, identical and arranged parallel and slightly spaced away to each other, and turned vertically upward, for the entire extent of the inner room 26, which are adapted to obtain said small through holes 14, and are shaped with cylindrical form or other suitable geometrical form, and are provided with an enlarged base 29 which is housed on, secured to and supported by the punch 17, and with an elongated rectilinear shank 30 having adequate diameter, depending on the diameter to be achieved for said small through holes 14, such needles being provided with a respective sharpened tip 31 and made with a length greater than the height of the matrix 16. In turn, several bushes 32 are adequately secured to the horizontal upper central flat part 22 of the matrix 16, which bushes pass through such central flat part 22 and are oriented in positions corresponding to those of the different needles 28, so as to permit these latter to be coupled with the same during the mold closing. The bushes 32 are made with cylindrical form or other suitable geometrical form and have respective through holes 33 ending at their lower part with funnel-shaped lower end portions 34, tapered from the lower side upward, such portions being wider than the thickness of the needles 28 for guiding the same, making easier their insertion through the through holes 33 of the same bushes during the mold closing, and also keeping such needles into a perfectly vertical position thereof, thereby obtaining the relative small through holes 14 with the adequate dimensions and directions for the entire thickness of said insulating panels. Furthermore, thanks to the funnel-shaped arrangement of said bushes 32, there are created some cavities 19' in the so obtained product, which are shaped in a corresponding manner (see Fig. 8).

## Claims

1. Insulating panel (5) for inhabited buildings of various kind, for insulating thermally the buildings in which it is built in, preferably on the outer surfaces of their peripheral walls, in a manner to provide for a covering enclosure of the inhabited buildings, which is subsequently covered with finishing materials and parging, the panel being constituted by a single insulating material, of the kind formed by foamable plastic materials, preferably foam polystyrene, provided with a first overlying layer (6) and a second underlying layer (7), wherein the first overlying layer (6) is turned outwards the building and is realized with a smaller thickness and the second underlying layer (7) is turned inwards the building and is realized with a greater thickness with respect to said first layer (6), said first and second layer of insulating material (6, 7) being crossed for the entire thickness thereof by a plurality of small through holes (14), adapted to let to pass from inside towards outside of the housings the condensate which is formed on the walls of the same housings, **characterized in that** the said first overlying layer (6) is realized with a light colour, so as to reflect partially the incident solar radiation, and a greater density of material and therefore a stiffness and a sturdiness greater than that of said second layer (7), and a high compression strength and a high strength to other mechanical actions in case exerted on to the enclosure outer part, and said second layer (7) is realized with the a smaller density of material, and therefore softer, and is also coloured dark or black, so as to reflect the incident thermic radiation, thereby increasing the thermal insulating capacity of this area of panel (5).

2. Insulating panel according to claim 1, **characterized in that** the dark colour of said second layer of material (7) is obtained with powdered material of such colour, preferably graphite, which is mixed with the material of this layer during the molding of the panel (5), in a manner that this dark or black coloured material be distributed uniformly for the entire extent of the same layer, and isn't mixed with the material of said first layer (6).

3. Insulating material according to claim 2, **characterized in that** on to the outer upper surface (8) of said first overlaying layer (6) and on to the outer lower surface (9) of said second underlying layer (7) there are provided by molding respective series of parallel rectilinear grooves (10, 11), which are perpendicular to each other, in a manner that there are provided some high relieves (12) of various shapes, so as to make easier the grasping onto both the outer surfaces of the panel (5) of the finishing material needed for applying the parging thereon, and that in the centre of said high relieves (12) of each outer surface there are provided hollowed zones (13), in the centre of which the end portions of the corresponding said small through holes (14) terminate.

4. Insulating material according to claim 3, **characterized in that** on to at least a surface of the panel (5), preferably on the outer surface of said first overlaying layer (6), there are provided some de-tensioning lines (15), adapted to ensure the indeformability of the installed panel due to thermal and/or mechanical stresses.

5. Process for obtaining an insulating panel (5) for inhabited buildings of various kind, provided with small through holes (14), provided through the entire thickness of the panel (5), and adapted to let to pass the condensate formed into the wall hollow spaces from the inside outward the same buildings, the panel (5) being adapted to be mounted on to the outer surfaces of the building peripheral walls, in a way to provide for a covering enclosure, and being made of insulating materials formed by foamable plastic materials, preferably foam polystyrene, and of different types, said insulating panel (5) being molded with standard operative steps with molding means (16, 17) of traditional type, provided with perforation means (28) comprising a plurality of thin metallic needles (28), identical and arranged parallel and slightly spaced away to each other, and adapted to realize said small through holes (14), and provided with guide means (32) adapted to guide said perforation means (28) during the molding operation, in a manner to provide for said small though holes (14) in the correct positions, whereby said plurality of thin metallic needles (28) are secured to the punch (17) of said molding means (16, 17) for the entire extent of the inner room (26) for molding the insulating panel (5), and whereby the plurality of thin metallic needles (28) are turned upward for the entire extent of the inner room (26) for molding the insulating panel (5), and whereby the plurality of thin metallic needles (28) are realized with a length greater than the height of said inner room (26), and whereby said guide means comprise a flat support plate (18) secured to said punch (17) and supporting said metallic needles (28), **characterized in that** said guide means also comprise a plurality of bushes (32) secured to the upper central part (22) of the matrix (16) of said molding means (16, 17), and passing through it, as well as oriented in positions corresponding to those of the different needles (28), said bushes (32) are provided with through holes (33) terminating at their lower part with funnel-shaped lower end portions (34), tapered upward from the lower side, for coupling said needles (28) during the closing of said punch (17) with respect to said matrix (16).

## Patentansprüche

1. Isolationstafel (5) für Wohngebäude unterschiedlicher Art zur thermischen Isolierung der Gebäude, in denen diese eingebaut ist, vorzugsweise auf den äußeren Oberflächen der Umfangswände, um eine Abdeckung der Wohngebäude vorzusehen, welche nachfolgend mit Deckmaterialien und Verputz abgedeckt wird, wobei die Tafel durch ein einziges Isolationsmaterial gebildet ist, welches aus Kunststoffschaummaterialien, vorzugsweise Polystyrolschaum, gebildet ist, das mit einer ersten Auflageschicht (6) und einer zweiten Unterlageschicht (7) versehen ist, wobei die erste Auflageschicht (6) nach außen vom Gebäude weg gewandt ist und mit einer kleineren Dicke ausgebildet ist und die zweite Unterlageschicht (7) nach innen bezüglich des Gebäudes gerichtet ist und mit einer größeren Dicke im Hinblick auf die erste Schicht (6) ausgebildet ist, wobei die ersten und zweiten Schichten von Isolationsmaterial (6, 7) über ihre gesamten Dicken durch eine Mehrzahl von kleinen Löchern (14) durchkreuzt werden, um Kondensat von der Innenseite zur Außenseite der Gebäude durchzulassen, das an den Wänden des Gebäudes gebildet wird, **dadurch gekennzeichnet, dass** die erste Auflageschicht (6) mit einer hellen Farbe versehen ist, um auffallende Sonnenstrahlung teilweise zu reflektieren und eine größere Materialdichte und daher Steifheit und Festigkeit aufweist, die größer als die der zweiten Schicht (7) ist und mit einer hohen Druckfestigkeit und hohem Widerstand gegenüber andere mechanischen Einwirkungen, welche auf das umhüllende äußere Teil einwirken können, versehen ist und die zweite Schicht (7) mit einer kleineren Materialdichte und daher weicher ist und ferner in dunkler Farbe oder schwarz ausgebildet ist, um auftretende thermische Strahlung zu reflektieren, wobei die thermische Isolationskapazität in diesem Bereich der Tafel (5) verbessert ist.

2. Isolationstafel nach Anspruch 1, **dadurch gekennzeichnet, dass** die dunkle Farbe der zweiten Materialschicht (7) durch ein Pulvermaterial dieser Farbe, wie farbiges Graphit, erreicht ist, das mit dem Material dieser Schicht während der Formung der Tafel (5) gemischt wird, wobei das dunkle oder schwarzgefärbte Material gleichmäßig für den gesamten Bereich der gleichen Schicht verwendet wird und nicht mit dem Material der ersten Schicht (6) vermischt wird.

3. Isolationsmaterial nach Anspruch 2, **dadurch gekennzeichnet, dass** auf der äußeren oberen Oberfläche (8) der ersten Auflageschicht (6) und auf der unteren äußeren Oberfläche (9) der zweiten Unterlageschicht (7) durch Ausformung jeweils Reihen von parallelen geradlinigen Vertiefungen (10, 11) vorgesehen sind, die zueinander rechtwinklig angeordnet sind, so dass erhöhte Prägungen (12) verschiedener Formen vorgesehen ist, um das Haften der Deckmaterialien an beiden äußeren Oberflächen der Tafel des fertiggestellten Materials zu verbessern, welches zum Aufbringen des Putzes erforderlich ist, und dass das Zentrum der erhöhten Prägung (12) jeder äußeren Seite mit hohlen Bereichen (13) versehen ist, in deren Zentrum die Endbereiche der entsprechenden kleinen Durchbohrungen enden.

4. Isolationsmaterial nach Anspruch 3, dadurch gekenntzeichnet, dass auf wenigstens einer Oberfläche der Tafel (5), vorzugsweise an der äußeren Oberfläche der ersten Auflageschicht (6), einige Entspannungslinien (15) vorgesehen sind, die ausgebildet sind, um die Umverformbarkeit der installierten Tafel aufgrund thermischer und/oder mechanischer Belastungen sicherzustellen.

5. Verfahren zur Ausbildung einer Isolationstafel (5) für Wohngebäude unterschiedlicher Art, welche mit kleinen Durchbohrungen (14) versehen sind, die sich durch die gesamte Dicke der Tafel (5) erstrecken und ausgebildet sind, um Kondensat, das in den Hohlräumen der Wand an der Innenseite des Gebäudes nach außen gebildet ist, hindurchzulassen, wobei die Tafel (5) an den äußeren Oberflächen der Gebäudewände befestigt ist, um eine Abdeckung herzustellen, welche aus isolierenden Materialien aus Kunststoffmaterialschäumen hergestellt ist, vorzugsweise Schaumpolystyrol unterschiedlicher Arten, wobei die Isolationstafel (5) in Standartschritten mit Formmitteln (16, 17) üblicher Art ausgeformt ist, welche mit einem Perforationsmittel (28) versehen sind, welches eine Vielzahl von dünnen metallischen Nadeln (28) enthält, die identisch und parallel und mit leichtem Abstand zueinander angeordnet und ausgebildet sind, um die kleinen Bohrungen (14) zu erstellen und mit Führungsmitteln (32) versehen sind, um die Perforationsmittel (28) während der Formbildung so zu führen, dass kleine Bohrungen (14) in den richtigen Positionen erzeugt werden, wobei die Mehrzahl der dünnen metallischen Nadeln (28) an dem Stempel (17) der Formmitteln (16, 17) über die gesamte Erstreckung des Innenraums (26) zur Ausbildung der Isolationstafel (5) vorgesehen sind, und wobei die Mehrzahl der dünnen metallischen Nadeln (28) über die gesamte Erstreckung des Innenraums (26) zur Ausbildung der Isolationstafel (5) nach oben gerichtet sind, und wobei die Mehrzahl der dünnen metallischen Nadeln (28) mit einer Länge größer als die Höhe des Innenraums (26) ausgebildet sind, und wobei die Führungsmittel eine flache Trägerplatte (18) enthalten, die an dem Stempel (17) befestigt ist und die metallischen Nadeln (28) trägt, **dadurch gekennzeichnet, dass** die Führungsmittel ferner eine Mehrzahl von Hülsen (32) enthalten, die an dem oberen zentralen Teil (22) der Matrix (16) der Formmittel (16, 17) befestigt sind und dort hindurchragen sowie sich an Positionen befinden, die denen der unterschiedlichen Nadeln (28) entsprechen, wobei die Hülsen (32) mit Bohrungen (33) versehen sind, die an ihrem unteren Teil in trichterförmigen unteren Endteilen (34) enden, welche von der unteren Seite nach oben zulaufen, um die Nadeln (28) während des Schließens des Stempels (17) in Bezug auf die Matrix (16) zu koppeln.

## Revendications

1. Panneau d'isolation (5) pour des bâtiments habités de divers types, pour isoler thermiquement les bâtiments dans lesquels il est intégré, de préférence sur les surfaces extérieures de leurs murs périphériques, de manière à réaliser une enceinte de recouvrement des bâtiments habités, qui est par la suite recouverte de matériaux de finition et de crépi, le panneau étant constitué d'un matériau isolant unique, du type formé par des matières plastiques expansibles, de préférence du polystyrène expansé, pourvu d'une première couche sus-jacente (6) et d'une deuxième couche sous-jacente (7), dans lequel la première couche sus-jacente (6) est tournée vers l'extérieur du bâtiment et a une plus petite épaisseur et la deuxième couche sous-jacente (7) est tournée vers l'intérieur du bâtiment et à une épaisseur plus grande par rapport à ladite première couche (6), lesdites première et deuxième couches de matériau isolant (6, 7) étant traversées à travers l'épaisseur entière de celles-ci par une pluralité de petits trous traversants (14), conçus pour laisser passer, de l'intérieur vers l'extérieur des logements, le condensat qui est formé sur les murs des susdits logements, **caractérisé en ce que** ladite première couche sus-jacente (6) a une couleur claire, de manière à réfléchir partiellement le rayonnement solaire incident, et une densité de matériau plus grande et par conséquent une rigidité et une solidité plus grandes que celles de ladite deuxième couche (7), et une résistance à la compression élevée et une résistance élevée à d'autres actions mécaniques dans le cas où elles sont exercées sur la partie extérieure de l'enceinte, et ladite deuxième couche (7) a une densité de matériau plus faible, et est par conséquent plus souple, et est également de couleur foncée ou noire, de manière à réfléchir le rayonnement thermique incident, augmentant de ce fait la capacité d'isolation thermique de cette zone du panneau (5).

2. Panneau d'isolation selon la revendication 1, **caractérisé en ce que** la couleur foncée de ladite deuxième couche de matériau (7) est obtenue avec un matériau en poudre de cette couleur, de préférence du graphite, qui est mélangé avec le matériau de cette couche pendant le moulage du panneau (5), d'une manière telle que ce matériau de couleur foncée ou noire soit réparti uniformément sur l'étendue entière de la susdite couche, et ne soit pas mélangé avec le matériau de ladite première couche (6).

3. Matériau d'isolation selon la revendication 2, **caractérisé en ce que**, sur la surface supérieure extérieure (8) de ladite première couche sus-jacente (6) et sur la surface inférieure extérieure (9) de ladite deuxième couche sous-jacente (7), une série respective de rainures rectilignes parallèles (10, 11) sont réalisées par moulage, lesquelles sont perpendiculaires les unes aux autres, d'une manière telle que certains reliefs élevés (12) de diverses formes soient réalisés, de manière à faciliter la prise sur les deux surfaces extérieures du panneau (5) du matériau de finition nécessaire pour appliquer le crépi sur celui-ci, et **en ce que**, au centre desdits reliefs élevés (12) de chaque surface extérieure, des zones creusées (13) sont réalisées, au centre desquelles les parties d'extrémité desdits petits trous traversants (14) correspondants se terminent.

4. Matériau d'isolation selon la revendication 3, **caractérisé en ce que**, sur au moins une surface du panneau (5), de préférence sur la surface extérieure de ladite première couche sus-jacente (6), certaines lignes de relâchement de tension (15) sont réalisées, conçues pour garantir l'indéformabilité du panneau installé du fait de contraintes thermiques et/ou mécaniques.

5. Processus pour obtenir un panneau d'isolation (5) pour des bâtiments habités de divers types, pourvu de petits trous traversants (14), prévus à travers l'épaisseur entière du panneau (5), et conçus pour laisser passer le condensat formé dans les espaces creux des murs de l'intérieur vers l'extérieur des susdits bâtiments, le panneau (5) étant conçu pour être monté sur les surfaces extérieures des murs périphériques du bâtiment, de manière à réaliser une enceinte de recouvrement, et étant réalisé en des matériaux isolants formés par des matières plastiques expansibles, de préférence du polystyrène expansé, et de différents types, ledit panneau d'isolation (5) étant moulé par des étapes fonctionnelles standard avec des moyens de moulage (16, 17) de type classique, pourvus de moyens de perforation (28) comprenant une pluralité d'aiguilles métalliques minces (28), identiques et agencées parallèlement et légèrement espacées les unes des autres, et conçues pour réaliser lesdits petits trous traversants (14), et pourvus de moyens de guidage (32) conçus pour guider lesdits moyens de perforation (28) pendant l'opération de moulage, de manière à réaliser lesdits petits trous traversants (14) aux positions correctes, moyennant quoi ladite pluralité d'aiguilles métalliques minces (28) sont fixées au poinçon (17) desdits moyens de moulage (16, 17) sur l'étendue entière de l'espace intérieur (26) pour mouler le panneau d'isolation (5), et moyennant quoi la pluralité d'aiguilles métalliques minces (28) sont tournées vers le haut sur l'étendue entière de l'espace intérieur (26) pour mouler le panneau d'isolation (5), et moyennant quoi la pluralité d'aiguilles métalliques minces (28) sont réalisées avec une longueur supérieure à la hauteur dudit espace intérieur (26), et moyennant quoi lesdits moyens de guidage comprennent une plaque de support plate (18) fixée au dit poinçon (17) et supportant lesdites aiguilles métalliques (28), **caractérisé en ce que** lesdits moyens de guidage comprennent également une pluralité de douilles (32) fixées à la partie centrale supérieure (22) de la matrice (16) desdits moyens de moulage (16, 17), et passant à travers celle-ci, ainsi qu'orientées dans des positions correspondant à celles des différentes aiguilles (28), lesdites douilles (32) sont pourvues de trous traversants (33) se terminant à leur partie inférieure par des parties d'extrémité inférieures (34) en forme d'entonnoir, effilées vers le haut à partir du côté inférieur, pour accoupler lesdites aiguilles (28) pendant la fermeture dudit poinçon (17) en relation avec ladite matrice (16).
